Europäisches Patentamt

(19) European Patent Office

Office européen des brevets

(11) Veröffentlichungsnummer: **0 080 643**
A2

(12) **EUROPÄISCHE PATENTANMELDUNG**

(21) Anmeldenummer: **82110547.5**

(22) Anmeldetag: **16.11.82**

(51) Int. Cl.³: **B 29 D 27/02**
**B 29 B 1/06**

(30) Priorität: **27.11.81 DE 3147160**

(43) Veröffentlichungstag der Anmeldung:
**08.06.83 Patentblatt 83/23**

(84) Benannte Vertragsstaaten:
**DE FR GB IT**

(71) Anmelder: **BAYER AG**
**Zentralbereich Patente, Marken und Lizenzen**
**D-5090 Leverkusen 1, Bayerwerk(DE)**

(72) Erfinder: **Krippl, Kurt**
**Niederstrasse 104**
**D-4019 Monheim(DE)**

(72) Erfinder: **Schulte, Klaus, Ing. grad.**
**Kurt-Schumacher-Ring 91 b**
**D-5090 Leverkusen(DE)**

(54) **Verfahren und Einrichtung zum Herstellen eines fliessfähigen, Massivstoff oder Schaumstoff bildenden Reaktionsgemisches.**

(57) Um beim Herstellen eines fließfähigen, Massivstoff oder Shaumstoff bildenden Reaktionsgemisches mindestens eine der Reaktionskomponenten exakt mit der richtigen Gasmenge zu beladen, führt man die Gasbeladung chargenweise in einem Zwischenbehälter (14) durch, indem man eine bestimmte Volumenmenge $V_1$ der Reaktionskomponente in einen Gasbeladungsraum (18) unter dem Druck $p_1$ einbringt, diese Menge dann auf das Volumen $V_2$ beim Druck $p_2$ entspannt und mit einer empirisch ermittelten, mit der Volumendifferenz im Verhältnis stehenden Gasmenge im Gasbeladungsraum (18) belädt, dieses Gas anschließend durch Anlegen eines höheren Druckes in Lösung bringt und dann die Charge mindestens teilweise mit der zweiten Reaktionskomponente in einem Mischkopf (9) vermischt.

FIG. 1

Croydon Printing Company Ltd.

EP 0 080 643 A2

0080643

BAYER AKTIENGESELLSCHAFT     5090 Leverkusen, Bayerwerk
Zentralbereich                          Mr/bc/c
Patente, Marken und Lizenzen


Verfahren und Einrichtung zum Herstellen eines fließfähigen, Massivstoff oder Schaumstoff bildenden Reaktionsgemisches

Die Erfindung richtet sich auf ein Verfahren und eine Einrichtung zum Herstellen eines fließfähigen, Massivstoff oder Schaumstoff bildenden Reaktionsgemisches, wobei mindestens zwei fließfähige Reaktionskomponenten unter Druck im dosierten Verhältnis miteinander vermischt werden und mindestens eine dieser Reaktionskomponenten vor der Vermischung mit Gas beladen wird.

Diese Gasbeladung ist für den Reaktionsablauf und für die gewünschten Eigenschaften des Endproduktes ein kritischer Parameter. Für viele chemische Systeme reicht das in den Reaktionskomponenten gelöst enthaltene Gas nicht aus, weshalb man zusätzlich Gas einmischen muß. Die zuzugebende Gasmenge ist abhängig von der chemischen Natur der Ausgangskomponenten, ihrer Reaktionsfähigkeit sowie den gewünschten physikalischen Eigenschaften des Endproduktes und wird dementsprechend gewählt. Insbesondere Polyurethanrohstoffe benötigen oft eine solche zusätzliche Gasbeladung, und zwar insbe-

Le A 21 396-Ausland

sondere dann, wenn harte Integralschaumstoffe hergestellt werden sollen.

Solange an die Endprodukte keine zu hohen Anforderungen gestellt wurden, reichten die üblichen Methoden der Begasung, beispielsweise durch Einrühren von Luft mittels Rührer oder durch Eintrag mittels Begasungsdüsen oder poröse Platten aus. Mit steigenden Ansprüchen an das Endprodukt wurde offensichtlich, daß die Gasbeladung durch längere Pausenzeiten der Mischvorrichtung und/oder Kreislaufführung der Komponenten so starken Schwankungen unterworfen war, daß sich dies auf das Endprodukt so nachteilig auswirkte, daß die dadurch bedingten Qualitätsschwankungen nicht mehr in Kauf genommen werden konnten. Man hat deshalb versucht, die Gasbeladung zu messen und im Hinblick auf einen Sollwert durch zusätzliches Einmischen von Gas in die Reaktionskomponente konstant zu halten (US-PS 4 089 206). Hierzu benutzt man einen als Meßzylinder ausgebildeten Zwischenbehälter, der an die vom Vorratsbehälter zum Mischkopf führende Zuleitung angeschlossen ist. Während der Pausenzeiten des Mischkopfes lassen sich in dem Zwischenbehälter Probemessungen durchführen, indem man das Differenzvolumen der Probe bei abweichenden angelegten Drücken als Maß für die tatsächliche Gasbeladungszeit ermittelt. Weicht diese tatsächliche Gasbeladung vom Sollwert ab, so gibt man eine mit der Abweichung im Verhältnis stehende Gasmenge beim nächsten Mischvorgang in die Zuleitung kontinuierlich ein und vermischt dieses Gas mit der strömenden Reaktionskomponente im Durchlauf. Beim Herstellen großer Gemisch-

mengen in einem Arbeitsgang hat dies den Nachteil, daß
für den gesamten Mischvorgang die zuzuführende Gasmenge durch die einmalige Messung der Gasbeladung vor
Beginn des Mischvorganges festgelegt ist und zwischenzeitlich auftretende Schwankungen der natürlichen Gasbeladung der Komponente unberücksichtigt bleiben. Besteht
andererseits Bedarf nur an kleineren Gemischmengen, wie
dies bei der Herstellung kleinerer Artikel im Formverfahren der Fall ist, so sind die Fehler durch in der Zuleitung verbleibende Reste vom vorhergehenden Mischvorgang
und/oder durch unrichtiges Verhältnis der zeitlich zugeführten Gasmenge zur zeitlich strömenden Komponente im
Anfangsstadium der Gasbeladung so groß, daß der angestrebte Zweck nicht erfüllt wird.

Man hat auch schon versucht, die Gasbeladung kontinuierlich durchzuführen (DE-AS 25 43 302), indem man das
zeitlich geförderte Mengenvolumen der mit Gas beladenen Reaktionskomponente unter einem ersten, gegenüber
einem nachgeschalteten zweiten Druckniveau höher oder
niedriger gehaltenen Druckniveau mißt, daran anschließend die Reaktionskomponente auf ein zweites, gegenüber dem ersten Druckniveau niedriger oder höher gehaltenes Druckniveau bringt, das zeitlich geförderte
Mengenvolumen erneut mißt, daraus den Differenzwert
der gemessenen Mengenvolumen als Maß für die Gasbildung ermittelt, diesen mit einem vorgegebenen Sollwert
vergleicht und die zuzugebende Gasmenge im Sinne der
Einhaltung des Sollwertes manuell oder über eine automatische Regelvorrichtung regelt. Hierzu bedient man
sich geeigneter Volumenstrommeßgeräte, Drucksprung-

Le A 21 396

aggregate, eines Grenzwertanzeigegerätes und eines entsprechenden Regelkreises für den Regler der Gaszuleitungsvorrichtung. Auch bei dieser Art der Gasbeladung findet immer erst eine nachträgliche Korrektur statt; es ergibt sich also zunächst eine bei den hohen Fördergeschwindigkeiten bereits gravierend ins Gewicht fallende falsche Gasbeladung für eine der Trägheit des Regelkreises entsprechende Menge an Reaktionskomponente.

Die Aufgabe besteht im Auffinden eines Verfahrens und einer Einrichtung, womit es möglich ist, die Genauigkeit der Gasbeladung dahingehend zu verbessern, daß die dem Mischkopf zur Vermischung zuzuführende Reaktionskomponente vom ersten bis zum letzten Tropfen exakt die richtige Gasbeladung aufweist.

Dies gelingt durch die Kombination folgender Merkmale:

a)    Die mit Gas zu beladende Reaktionskomponente wird unter einem Druck gehalten, bei dem das bereits in der Reaktionskomponente befindliche Gas in Lösung gehalten wird;

b)    jeweils eine Charge definierten Volumens dieser unter dem definierten ersten Druck stehenden Reaktionskomponente wird in einen geschlossenen Raum eingebracht,

c)    die Charge wird auf einen zweiten definierten Druck entspannt,

d)    in die entspannte Charge wird soviel Gas eingebracht,

Le A 21 396

bis innerhalb des geschlossenen Raumes die nunmehr mit Gas beladene Charge ein zweites definiertes Volumen einnimmt,

e) nach Erreichen des zweiten definierten Volumens wird durch Anlegen eines entsprechend hohen Drukkes das in die Charge eingebrachte Gas in Lösung gebracht,

f) danach wird die mit Gas beladene Charge mindestens teilweise mit der zweiten Reaktionskomponente im vorgegebenen Verhältnis vermischt.

Nur durch die Gesamtheit dieser einzelnen, teils an sich bekannten oder naheliegenden Merkmalsschritte läßt sich überraschender Weise die exakte Gasbeladung einer oder beider Reaktionskomponenten über einen Mischvorgang konstant halten. Die Erfindung wendet sich also bewußt von der bekannten und auf den ersten Blick fortschrittlicher erscheinenden Begasung der Reaktionskomponente im Durchlauf ab. Durch das direkte Einbringen der erforderlichen Gasmenge in die Charge mit anschließendem in Lösung gehen des Gases in der Reaktionskomponente findet eine homogene Gasbeladung insbesondere dann statt, wenn man dafür sorgt, daß das Gas möglichst gleichmäßig verteilt in die Komponente eingeführt wird. Hält man die Charge unter Druck, so ist auch bei längeren Pausen des Mischkopfes keine Entmischung von Gas und Reaktions- komponente zu befürchten.

Le A 21 396

Die Einrichtung zur Durchführung des Verfahrens geht aus von:

a)   Vorratsbehältern für die Reaktionskomponenten, von denen

b)   Zuleitungen über

c)   Dosierpumpen zu einem

d)   Mischkopf führen, wobei

e)   mindestens einer der Zuleitungen ein Zwischenbehälter zugeordnet ist, welcher aufweist

fa)  Abschlußorgane für Zu- und Ablauf,
fb)  eine Druckeinstellvorrichtung,
fc)  eine Volumeneinstellvorrichtung, wobei

g)   dem Zuführungssystem für die Reaktionskomponente eine Gasbeladungseinrichtung zugeordnet ist.

Das Neue ist darin zu sehen, daß diese Gasbeladungseinrichtung in den mit der Reaktionskomponente zu füllenden Teil des Zwischenbehälters einmündet.

Gegenüber der Einrichtung nach der US-PS 4 089 204 hat hier also der Zwischenbehälter nicht die Funktion eines relativ kleinen Meßzylinders, sondern bei der neuen Einrichtung stellt der Zwischenbehälter einen Arbeitsbehälter entsprechender Größe dar, wobei die

- 7 -

bekannten Aggregate, wie Druckeinstellvorrichtung und Volumeneinstellvorrichtung neue bzw. zusätzliche Funktionen übernehmen. Es versteht sich, daß diese Aggregate in verschiedenster Art und Weise ausgebildet sein können und es für den Fachmann keinerlei schöpferischer Tätigkeit bedarf, an sich bekannte Vorrichtungen zum Messen und Einstellen von Druck und Volumen für den vorliegenden Anwendungszweck entsprechend zuzuschneiden.

Da die Reaktionskomponenten in den Vorratsbehältern in aller Regel unter einem Vordruck gehalten werden, der so groß ist, daß das bereits in der Komponente enthaltene Gas sich in Lösung befindet, läßt sich dieser Vordruck in vorteilhafter Weise zum Transportieren einer entsprechenden Menge an Reaktionskomponente in den Zwischenbehälter verwenden, wo dann dieser Vordruck gleichzeitig als Ausgangsdruck bei dem ersten Volumen verwendbar ist.

Als Druckeinstellvorrichtung für den dem zweiten Volumen zugeordneten Druck läßt sich in vorteilhafter Weise der durch die Gasbeladungseinrichtung erzeugte Druck verwenden. Es eignet sich aber auch jede andere Druckeinstellvorrichtung, wie beispielsweise jene, die erforderlich ist, um die Charge anschließend auf höheren Druck zu bringen. Zum Erzeugen der Drücke für verschiedene Zwecke eignen sich Kompressoren, Membranpumpen, aber auch gegebenenfalls vorhandene Druckluftnetze, die über einstellbare Drosselventile

Le A 21 396

anzapfbar sind. Es versteht sich, daß das zuzuführende Gas in der im Gasbeladungsraum befindlichen Komponente sich mit bisher bekannten Mitteln für die Gasbeladung verteilen läßt. Hierzu eignen sich poröse Platten, Begasungsdüsen und Rührer.

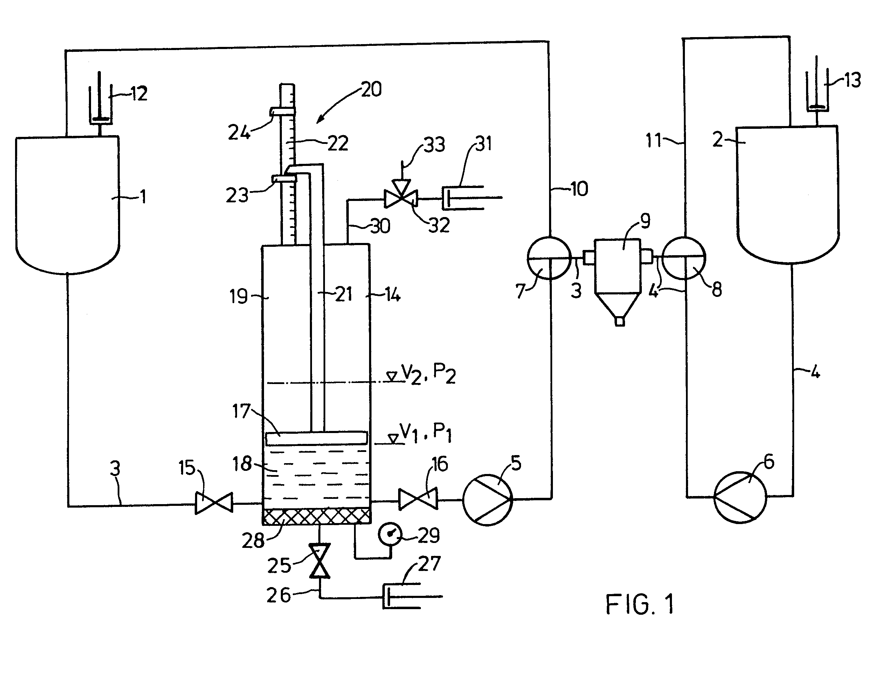

In der Zeichnung ist die erfindungsgemäße Einrichtung in einem Ausführungsbeispiel rein schematisch dargestellt und nachstehend näher erläutert:

Von Vorratsbehältern 1,2 führen Zuleitungen 3,4 über Dosierpumpen 5,6 und Umschaltventile 7,8 zu einem Mischkopf 9. Von den Umschaltventilen 7,8 führen Kreislaufleitungen 10,11 zu den Vorratsbehältern 1,2 zurück. Den Vorratsbehältern 1,2 sind Druckmittelquellen 12,13 zum Erzeugen eines Vordruckes zugeordnet. In die Zuleitung 3 ist ein Zwischenbehälter 14 über Absperrventile 15, 16 für Zu- und Ablauf eingeschaltet. Sein Inneres ist durch eine schwimmende Kolbenscheibe 17 in einen Gasbeladungsraum 18 und einen Druckmittelraum 19 unterteilt. Die Kolbenscheibe 17 ist Teil einer Volumeneinstelleinrichtung 20, zu der auch eine Kolbenstange 21 gehört, mittels welcher sich durch an einer Meßschiene 22 fixierbare Anschläge 23,24 durch Einstellen von entsprechenden Füllstandshöhen definierte Volumina vorgeben lassen. In den Gasbeladungsraum 18 führt die mit einem Absperrventil 25 versehene Zuleitung 26 einer Gasbeladungseinrichtung 27. Die Zuleitung 26 mündet über eine poröse Gasverteilungsplatte 28 ein. Dem Gasbeladungsraum 18 ist außerdem eine Druckeinstellvorrichtung zugeordnet. Sie be-

Le A 21 396

steht zum einen aus der Druckmittelquelle 12 und zum anderen aus der Gasbeladungseinrichtung 27 sowie einem Manometer 29. Der Druckmittelraum 19 ist über eine Leitung 30 mit einer Druckmittelquelle 31 verbunden, in der ein Absperrventil 32 angeordnet ist. Vom Absperrventil 32 führt ein Entlastungsstutzen 33 ins Freie.

Die neue Verfahrensweise sei unter Benutzung der in der Zeichnung dargestellten Einrichtung an einem Durchführungsbeispiel erläutert:

In den Vorratsbehältern 1,2 werden Polyol bzw. Isocyanat als Reaktionskomponenten gelagert. Sie werden mittels der Druckmittelquellen 12,13 unter einem Vordruck $p_1$ von 3 bar gehalten, unter welchem alles in der Reaktionskomponente enthaltene Gas in Lösung geht. Zum Verarbeiten einer Charge für das Vermischen der Reaktionskomponenten wird zunächst die Volumeneinstellvorrichtung 20 durch Einstellen des Anschlages 23 auf das Ausgangsvolumen von $V_1$ = 5 l eingestellt. Sodann wird das Absperrventil 15 bei geschlossenem Absperrventil 16 geöffnet und der Gasbeladungsraum 18 vom Volumen $V_1$ füllt sich unter dem Vordruck $p_1$ mit Polyol. Nun wird das Absperrventil 15 geschlossen und die Charge auf den Druck $p_2$ von 1 bar entspannt. Entsprechend einer für die Gasbeladung empirisch ermittelten charakteristischen Kennlinie wurde ein zweites Volumen $V_2$ = 6 l ausgewählt und durch entsprechendes Einstellen des Anschlages 24 der Volumeneinstellvorrichtung 20 justiert.

Le A 21 396

Nun wird der Gasbeladungsraum 18 durch Einführen von Gas (Luft) mittels der Gasbeladungseinrichtung 27 bis zum Erreichen des Volumens $V_2$ vergrößert, wobei der Druck $p_2$ aufrechterhalten wird. Nach der Gasbeladung wird das Absperrventil 25 geschlossen. Anschließend wird die Charge durch Betätigung der Druckmittelquelle 31 und Beaufschlagen des Druckmittelraumes 19 auf einen (mindestens dem Lösungsdruck des Gases entsprechenden) Druck von 10 bar gebracht, bevor das Absperrventil 16 geöffnet wird und die Dosierpumpen 5,6 zu arbeiten beginnen. Um Anlaufschwankungen zu vermeiden, werden beide Komponenten zunächst für etwa 3 Sekunden über die Rücklaufleitungen 10,11 gefahren. Sodann werden die Umschaltventile 7,8 auf "Mischen" umgestellt, so daß die Reaktionskomponenten im dosierten Verhältnis in die Mischkammer des Mischkopfes 9 eingedüst werden. Es können so viele Mischvorgänge durchgeführt werden wie die mit Gas beladene Charge dazu ausreicht. Nach dem Entleeren der Charge wird der Druckmittelraum 19 über das Absperrventil 32 und den Entlastungsstutzen 33 belüftet. Alsdann hat man eine neue Charge mit Gas in der vorbeschriebenen Weise zu beladen.

Le A 21 396

Patentansprüche

1) Verfahren zum Herstellen eines fließfähigen, Massivstoff oder Schaumstoff bildenden Reaktionsgemisches, wobei mindestens zwei fließfähige Reaktionskomponenten unter Druck im dosierten Verhältnis miteinander vermischt werden und mindestens eine dieser Reaktionskomponenten vor der Vermischung mit Gas beladen wird, gekennzeichnet durch die Kombination folgender Merkmale:

    a) Die mit Gas zu beladende Reaktionskomponente wird unter einem Druck gehalten, bei dem sich das bereits in der Reaktionskomponente befindliche Gas in Lösung gehalten wird;

    b) jeweils eine Charge definierten Volumens dieser unter dem definierten ersten Druck stehenden Reaktionskomponente wird in einen geschlossenen Raum eingebracht,

    c) die Charge wird auf einen zweiten definierten Druck entspannt,

    d) in die entspannte Charge wird soviel Gas eingebracht, bis innerhalb des geschlossenen Raumes die nunmehr mit Gas beladene Charge ein zweites definiertes Volumen einnimmt,

    e) nach Erreichen des zweiten definierten Volumens wird durch Anlegen eines entsprechend hohen Druckes das in die Charge eingebrachte

Le A 21 396

Gas in Lösung gebracht,

f) danach wird die mit Gas beladene Charge mindestens teilweise mit der zweiten Reaktionskomponente im vorgegebenen Verhältnis vermischt.

2) Einrichtung zur Durchführung des Verfahrens nach
Anspruch 1, bestehend aus:

a) Vorratsbehältern (1,2) für die Reaktionskomponenten, von denen

b) Zuleitungen (3,4) über

c) Dosierpumpen (5,6) zu einem

d) Mischkopf (9) führen, wobei

e) mindestens einer der Zuleitungen (3,4) ein
Zwischenbehälter (14) zugeordnet ist, welcher
aufweist

fa) Abschlußorgane (15,16) für Zu- und Ablauf,
fb) eine Druckeinstellvorrichtung (12,27),
fc) eine Volumeneinstellvorrichtung (20), wobei

g) dem Zuführungssystem (1,3,5,14) für die Reaktionskomponente eine Gasbeladungseinrichtung (27) zugeordnet ist, dadurch gekennzeichnet, daß

h)   diese Gasbeladungseinrichtung (27) in den
     mit der Reaktionskomponente zu füllenden
     Teil (18) des Zwischenbehälters (14) ein-
     mündet.

FIG. 1

0080643

1/1